# EUROPÄISCHE PATENTSCHRIFT

(11) **EP 2 419 304 B1**
(45) Veröffentlichungstag und Bekanntmachung des Hinweises auf die Patenterteilung: **10.04.2013**
(21) Anmeldenummer: 10719288.2
(22) Anmeldetag: 15.04.2010
(51) Int. Cl.: B60R 21/20, B60R 21/203

(54) **GASSACKANORDNUNG FÜR EIN FAHRZEUGINSASSEN-RÜCKHALTESYSTEM UND VERFAHREN ZUM HERSTELLEN EINER GASSACKANORDNUNG**
AIRBAG ARRANGEMENT FOR A VEHICLE OCCUPANT RESTRAINT SYSTEM AND METHOD FOR THE PRODUCTION OF AN AIRBAG MODULE
DISPOSITIF DE SAC À GAZ POUR SYSTÈME DE RETENUE D'OCCUPANTS D'UN VÉHICULE, ET PROCÉDÉ DE PRODUCTION D'UN MODULE DE SAC À GAZ

(30) Priorität: 16.04.2009 DE 102009017919
(43) Veröffentlichungstag der Anmeldung: 22.02.2012
(73) Patentinhaber: Takata AG, 63743 Aschaffenburg (DE)
(72) Erfinder: FECHNER, Tobias, 63743 Aschaffenburg (DE)
(74) Vertreter: Staroske, Sandro
(86) Internationale Anmeldenummer: PCT/EP2010/054926
(87) Internationale Veröffentlichungsnummer: WO 2010/119082

(56) Entgegenhaltungen:
- DE-A1- 10 114 208
- DE-U1-202005 011 878
- US-A1- 2007 138 769

## Beschreibung

Die vorliegende Erfindung betrifft eine Gassackanordnung für ein Fahrzeuginsassen-Rückhaltesystem gemäß Anspruch 1 sowie ein Verfahren zum Herstellen einer Gassackanordnung gemäß Anspruch 15.

Aus dem Stand der Technik sind Gassackpakete bekannt, die einen in einer Hülle vakuumverpackten Gassack aufweisen. Die Hülle ist insbesondere aus einer Unterfolie, die eine Ausnehmung zum Anordnen eines Gasgenerators aufweist, und einer mit der Unterfolie verschweißten Oberfolie gebildet. Bei derartigen Gassackpaketen kann das Problem auftreten, dass beim Entfalten des Gassacks eine starke Dehnung der Unterfolie auftritt und diese reißt, bevor der Gassack durch die Oberfolie hindurch aus der Hülle austritt. Das Reißen der Unterfolie kann dazu führen, dass Folienstücke in den Fahrzeuginnenraum geschleudert werden.

Die US2007/0138769A1 beschreibt beispielsweise eine Airbag-Vorrichtung nach dem Oberbegriff des Anspruchs 1 bzw ein Verfahren nach dem Oberbegriff des Anspruchs 15 umfassend einen Airbag, einen Gehäuseabschnitt für die Unterbringung des Airbag in einem umgelegten Zustand, eine Abdeckung zum Abdecken der Airbagöffnung und ein Halteelement, das aus einer Folienbahn gebildet ist, welches Abschnitte mit geringerer Dicke aufweist, wobei des Halteelement aus einer oberen und unteren Schicht gebildet ist. Das Halteelement hält dabei den Airbag in seinem gefalteten Zustand und reist im Falle eines Unfalls an den Abschnitten geringerer Dicke.

Das von der vorliegenden Erfindung zu lösende Problem besteht darin, die Sicherheit von Gassackpaketen zu verbessern.

Dieses Problem wird durch die Gassackanordnung mit den Merkmalen des Anspruchs 1 sowie durch das Verfahren zum Herstellen einer Gassackanordnung mit den Merkmalen des Anspruchs 15 gelöst. Weiterbildungen der Erfindung sind in den abhängigen Ansprüchen angegeben.

Danach wird eine Gassackanordnung für ein Fahrzeuginsassen-Rückhaltesystem bereitgestellt, mit
- einem Gassackpaket, das einen zum Schutz eines Fahrzeuginsassen aufblasbaren Gassack, ein Gehäuse, in dem das Gassackpaket aufgenommen ist, sowie eine Hülle, in der der Gassack vakuumverpackt ist, aufweist, wobei
- die Hülle ein erstes und ein zweites Hüllteil umfasst,
- das erste Hüllteil und das zweite Hüllteil jeweils mindestens einen Flanschabschnitt aufweisen,
- die beiden Flanschabschnitte miteinander verbunden sind,
- die Flanschabschnitte zunächst von dem übrigen Gassackpaket abstehen, nachdem sie miteinander verbunden wurden, und
- die beiden Flanschabschnitte zumindest teilweise so umgefaltet sind, dass sie sich entlang einer Außenseite des übrigen Gassackpaketes erstrecken, und
- die beiden Flanschabschnitte an der Außenseite des übrigen Gassackpaketes festgelegt oder zwischen dem Gehäuse und der Außenseite des Gassackpaketes geklemmt sind.

Somit werden die beiden Hüllteile über die Flanschabschnitte zur Herstellung einer evakuierbaren Hülle miteinander verbunden. Ein "Flanschabschnitt" ist ein insbesondere plan ausgebildeter Ansatz, der beispielsweise von dem übrigen Hüllteil absteht. In einer Variante weist zumindest einer der Flanschabschnitte eine geschlossene (umlaufende) Geometrie auf. Dies ist jedoch nicht zwingend notwendig, sondern es können auch nicht umlaufende, z.B. laschenartige Strukturen einen Flanschabschnitt ausbilden. Des Weiteren können selbstverständlich auch mehrere, insbesondere voneinander beabstandete Flanschabschnitte des ersten und/oder des zweiten Hüllteils vorgesehen sein.

Gemäß der Erfindung werden die beiden Flanschabschnitte nach ihrem Verbinden nicht wie üblich bis zur Verbindungsstelle (z.B. in Form einer Schweißnaht oder eines Schweißpunktes) entfernt (eingekürzt), sondern so umgefaltet, dass sie sich entlang einer Außenseite des übrigen Gassackpaketes erstrecken. Eine "Außenseite" des übrigen Gassackpaketes wird durch eine dem Gassack abgewandte Seite der Hülle gebildet. Unter dem "übrigen Gassackpaket" wird das Gassackpaket abzüglich der Flanschabschnitte verstanden. Nach dem Umfalten der Flanschabschnitte bilden die Flanschabschnitte in dem Bereich, in dem sie sich entlang der Außenseite des übrigen Gassackpaketes erstrecken, gewissermaßen selber eine Außenseite des (kompletten) Gassackpaketes.

Dadurch, dass die Flanschabschnitte sich entlang einer Außenseite des Gassackpaketes erstrecken, drückt der sich entfaltende Gassack sowohl gegen das erste als auch gegen das zweite Hüllteil, so dass beide Hüllteile beim Entfalten des Gassacks Kraft aufnehmen. Dadurch wird einer Belastung nur eines der Hüllteile und insbesondere einer Separation dieses Hüllteils durch die Belastung entgegengewirkt. Somit kann z.B. für den Fall, dass eines der beiden Hüllteile in Form einer tiefgezogenen Unterfolie ausgebildet ist, einer zu starken Belastung und somit einem Reißen dieser Unterfolie in einer ersten Phase der Gassackentfaltung entgegengewirkt werden.

Des Weiteren können die beiden Flanschabschnitte an der Außenseite des Gassackpaketes auch festgelegt sein, das heißt sie sind mit der Außenseite des übrigen Gassackpaketes über Befestigungsmittel verbunden. Die Befestigungsmittel umfassen beispielsweise eine Kleb- oder eine Schweißverbindung. Insbesondere kann auch nur einer der beiden Flanschabschnitte unmittelbar mit dem übrigen Gassackpaket verbunden sein, während der andere Flanschabschnitt nicht oder nur mittelbar über diesen (unmittelbar mit dem Gassackpaket verbundenen) Flanschabschnitt an dem Gassackpaket festgelegt ist. Alternativ können die beiden Flanschabschnitte auch zwischen dem Gehäuse und der Außenseite des Gassackpakets geklemmt sein.

In einer Weiterbildung der Erfindung erstreckt sich der umgefaltete Flanschabschnitt des ersten Hüllteils zwischen der Außenseite des übrigen Gassackpaketes und dem umgefalteten Flanschabschnitt des zweiten Hüllteiles, wobei der umgefaltete Flanschabschnitt des ersten Hüllteils insbesondere an der Außenseite des Gassackpaketes anliegt. Beispielsweise sind auch die Flanschabschnitte so angeordnet, dass sie nach Umfalten aneinander liegen.

Gemäß einer anderen Ausgestaltung der Erfindung umgibt das erste Hüllteil den Gassack an einer Seite, die einem Gasgenerator zum Aufblasen des Gassacks zugewandt ist. Gemäß dieser Variante bildet das erste Hüllteil eine Aufnahme für den Gassack. Zudem kann das zweite Hüllteil den Gassack an einer Seite umgeben, die einem Gasgenerator zum Aufblasen des Gassacks abgewandt ist, beispielsweise deckt sie eine in dem ersten Hüllteil ausgebildete Öffnung zum Einlegen des Gassacks in das erste Hüllteil ab. Darüber hinaus kann das Gassackpaket auch eine Ausnehmung zum Aufnehmen eines Gasgenerators aufweisen, die insbesondere in dem ersten Hüllteil (z.B. in Form einer Einbuchtung) ausgebildet ist.

In einer anderen Variante der Erfindung ist das Gassackpaket näherungsweise quaderförmig, wobei die Flanschabschnitte vor ihrem Umfalten näherungsweise senkrecht zu einer Seitenwand des Gassackpakets verlaufen und nach dem Verbinden so umgefaltet werden, dass sie sich entlang der Seitenwand erstrecken, wobei die Flanschabschnitte auch mit der Seitenwand des Gassackpaketes verbunden werden können.

Die Erfindung ist selbstverständlich nicht auf eine bestimmte Geometrie des Gassackpaketes beschränkt. Das Gassackpaket kann eine im Prinzip beliebige Geometrie aufweisen, wobei die erfindungsgemäße Gassackanordnung z.B. in einem Beifahrer- oder Fahrergassackmodul verwendet werden kann.

In einer anderen Ausgestaltung der Erfindung weist die Gassackanordnung ein Gehäuse auf, in dem das Gassackpaket ausgenommen ist. Insbesondere erstrecken sich die umgefalteten Flanschabschnitte zwischen der Außenseite des (übrigen) Gassackpaketes und einer Innenseite des Gehäuses.

Die beiden Flanschabschnitte sind insbesondere über eine (zum Beispiel nahtförmige) Kleb- oder Schweißverbindung miteinander verbunden. Darüber hinaus sind die beiden Hüllteile gemäß einem anderen Ausführungsbeispiel der Erfindung jeweils in Form einer Folie ausgebildet, wobei die zunächst separaten Folien miteinander verbunden werden, um die Gassackhülle zu bilden. Beispielsweise ist das erste und/oder das zweite Hüllteil eine tiefgezogene Folie, die z.B. zur Aufnahme eines Gasgenerators ausgebildet sein kann.

Die Erfindung betrifft auch ein Lenkrad eines Kraftfahrzeuges mit einer wie oben beschriebenen Gassackanordnung.

Des Weiteren umfasst die Erfindung ein Verfahren zum Herstellen einer Gassackanordnung für ein Fahrzeuginsassen-Rückhaltesystem, mit den Schritten
- Anordnen eines Gassacks in einem ersten Hüllteil;
- Verbinden eines Flanschabschnitts des ersten Hüllteils mit einem Flanschabschnitts eines zweiten Hüllteils zum Bilden einer Hülle, in der der Gassack angeordnet ist;
- Evakuieren der Hülle, so dass Hülle und Gassack ein Gassackpaket bilden;
- Umfalten zumindest eine Teiles der beiden Flanschabschnitte, so dass sie sich näherungsweise entlang einer Außenseite des übrigen Gassackpaketes erstrecken;
- Festlegen der beiden Flanschabschnitte an der Außenseite des übrigen Gassackpaketes oder Klemmen der beiden Flanschabschnitte zwischen einem Gehäuse und der Außenseite des Gassackpaketes.

Die Erfindung wird im Folgenden anhand von Ausführungsbeispielen unter Bezugnahme auf die Figuren näher erläutert. Es zeigen:
- Fig. 1: ein herkömmliches Gassackpaket;
- Fig. 2: ein Gassackpaket einer Gassackanordnung gemäß einem Ausführungsbeispiel der Erfindung; und
- Fig. 3: eine Draufsicht auf ein Gassackpaket einer Gassackanordnung gemäß einem weiteren Ausführungsbeispiel der Erfindung.

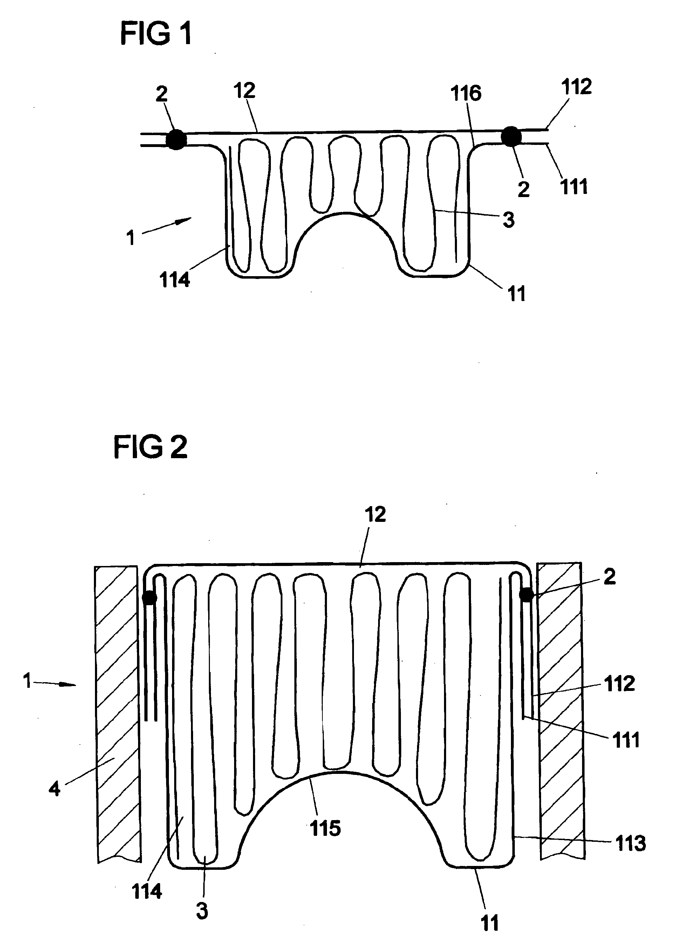

Das in Figur 1 gezeigte konventionelle Gassackpaket 1 weist ein erstes Hüllteil in Form einer tiefgezogenen Unterfolie 11 sowie ein zweites Hüllteil in Form einer Oberfolie 12 auf, die über Schweißnähte 2 miteinander verbunden sind. Die miteinander verbundenen Folien 11, 12 bilden eine Hülle, in der ein Gassack 3 vakuumverpackt ist.

Die Verbindung von Unter- und Oberfolie 11, 12 erfolgt über Flanschabschnitte 111, 112, die von der Unter- bzw. der Oberfolie ausgebildet werden. Die Flanschabschnitte 111, 112 stehen vor ihrem Verbinden über die Schweißnähte 2 von dem übrigen Gassackpaket ab, wobei das übrige Gassackpaket (d.h. das Gassackpaket ohne die Flanschabschnitte) z.B. im Wesentlichen quaderförmig ausgebildet ist. Die Flanschabschnitte 111, 112 stehen näherungsweise senkrecht zu einer Seitenwand des übrigen Gassackpaketes ab.

Genauer bildet die Unterfolie 11 eine Aufnahme 114 aus, in der der Gassack 3 angeordnet ist. Die Oberfolie 12 ist hingegen im Wesentlichen plan ausgebildet und verschließt eine Öffnung 116 der durch die Unterfolie ausgebildeten Aufnahme 114, wobei der Flanschabschnitt 112 der Oberfolie über die Öffnung 116 hinaussteht und diese z.B. randartig umgibt. Die Oberfolie ist insbesondere so beschafften, dass sie beim Entfalten des Gassacks aufreißt bzw. aufklappt, um einen Durchtritt des Gassacks zu ermöglichen.

Die ursprünglich vorhandenen Flanschabschnitte sind in dem in Figur 1 dargestellten Gassackpaket bereits überwiegend, d.h. bis zu den Schweißnähten 2, entfernt worden, so dass nur noch kurze Abschnitte der Flanschabschnitte über die Schweißnähte 2 hinausstehen.

In der tiefgezogenen Unterfolie 11 des Gassackpaketes ist zudem eine Ausnehmung 114 vorgesehen, die zur Aufnahme eines (nicht dargestellten) Gasgenerators, insbesondere in Form eines Rohrgasgenerators, dient. Somit bildet die Unterfolie 11 eine Seite des übrigen Gassackpaketes aus, die einem in der Ausnehmung 114 angeordneten Gasgenerator zugewandt ist.

Figur 2 zeigt eine erfindungsgemäße Gassackanordnung, die ein Gassackpaket 1 aufweist, das bis auf die Flanschabschnitte 111, 112 demjenigen der Fig. 1 entspricht. Die Flanschabschnitte 111, 112 sind im Unterschied zur Figur 1 nicht eingekürzt, sondern mitsamt der Schweißnähte 2 so umgefaltet, dass sie sich entlang einer Außenseite 113 des übrigen Gassackpaketes erstrecken.

Die Gassackanordnung der Figur 2 umfasst zudem ein Gehäuse 4, in dem das Gassackpaket 1 angeordnet ist. Das Gassackpaket ist so in dem Gehäuse 4 angeordnet, dass sich die umgefalteten Flanschabschnitte 111, 112 zwischen der Außenseite 113 des (übrigen) Gassackpaketes und einer Innenseite des Gehäuses 4 erstrecken, wobei sie im Wesentlichen parallel zueinander verlaufen.

Das Gehäuse 4 kann auch in Form eines Gasgeneratorträgers ausgebildet sein, an dem der Gasgenerator und/oder das Gassackpaket befestigt sind. Es kann jedoch auch ein zu dem Gehäuse 4 separater Gasgeneratorträger vorgesehen sein.

Es ist zudem denkbar, dass die umgefalteten Flanschabschnitte 111, 112 an der Außenseite des übrigen Gassackpaketes festgelegt sind, z.B. mittels einer Kleb- oder Schweißnaht, oder zwischen dem Gehäuse 4 und der Außenseite des Gassackpaketes geklemmt sind. Eine derartige Fixierung ist jedoch nicht unbedingt erforderlich, sondern es kann ausreichend sein, dass die Flanschabschnitte mit einer derartigen Länge zwischen dem übrigen Gassackpaket und dem Gehäuse angeordnet sind, dass ein Wiederherausrutschen der Flanschabschnitte vermieden wird.

Es wird darüber hinaus darauf hingewiesen, dass der Bereich der Flanschabschnitte, der die Schweißnähte 2 aufweist, nicht zwingend mit umgefaltet werden muss. Möglich ist auch, dass jeweils nur ein kürzerer, äußerer Teil der Flanschabschnitte umgefaltet und entlang der Außenseite des übrigen Gassackpaketes angeordnet wird. Mit anderen Worten wird der Bereich mit den Schweißnähten nicht umgefaltet, d.h. die Faltlinien, entlang derer die Flanschabschnitte umgeklappt werden, verlaufen nicht zwischen dem übrigen Gassackpaket und den Schweißnähten, sondern auf einer Seite der Schweißnähte, die dem übrigen Gassackpaket abgewandt ist.

Zudem wird darauf hingewiesen, dass in Abhängigkeit von der Geometrie des Gassackpaketes und der Flanschabschnitte anstelle mehrerer Schweißnähte auch eine einzelne, z.B. im Wesentlichen durchgehende (umlaufende) Schweißnaht vorgesehen sein kann.

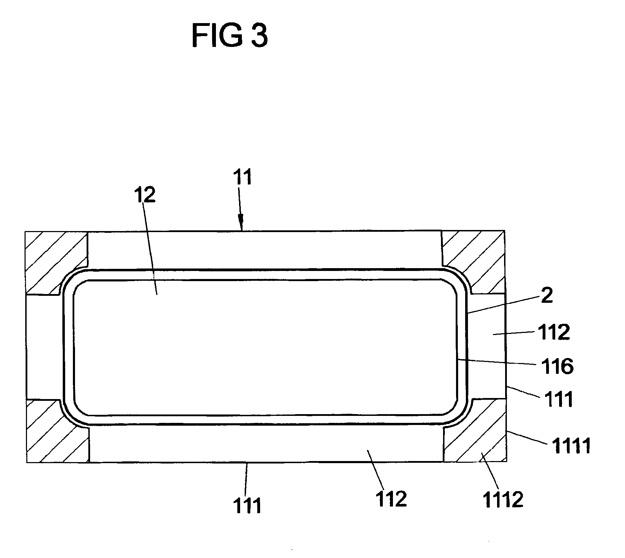

Fig. 3 betrifft ein Gassackpaket 1 einer Gassackanordnung gemäß einem weiteren Ausführungsbeispiel der Erfindung, wobei das Gassackpaket von oben, d.h. mit Blick auf ein erstes Hüllteil in Form einer Oberfolie 12, dargestellt ist.

Die näherungsweise rechteckig ausgebildete Oberfolie 12 überdeckt eine Öffnung 116 in einem zweiten Hüllteil in Form einer Unterfolie 11, wobei zunächst ein durchgehender Flanschabschnitt der Oberfolie 12 über die Öffnung 116 übersteht und diese randartig umgibt. Unterhalb des Flanschabschnittes der Oberfolie 12 erstreckt sich ein Flanschabschnitt der Unterfolie 11, wobei die beiden Flanschabschnitte mittels einer die Öffnung 116 umlaufenden Schweißnaht 2 miteinander verbunden sind.

Bevor die Flanschabschnitte nach unten, d.h. auf die unterhalb der Oberfolie 12 angeordnete Unterfolie 11 zu, umgefaltet werden, werden Eckbereiche 1111, 1112 der beiden umlaufenden Flanschabschnitte freigeschnitten oder entfernt, um das Umfalten zu vereinfachen. Durch das Freischneiden oder Entfernen der Eckbereiche entstehen mehrere laschenartige Flanschabschnitte 111, 112, die vor dem Umfalten jeweils von einer der Seitenwände des übrigen Gassackpaketes abstehen und sich nach Umfalten jeweils entlang einer der Seitenwände des Gassackpaketes erstrecken.

### Bezugszeichenliste

- 1: Gassackpaket
- 2: Schweißnaht
- 3: Gassack
- 4: Gehäuse
- 11: Unterfolie
- 12: Oberfolie
- 111, 112: Flanschabschnitt
- 113: Außenseite
- 114: Aufnahme
- 115: Ausnehmung
- 116: Öffnung

## Patentansprüche

1. Gassackanordnung für ein Fahrzeuginsassen-Rückhaltesystem, mit
- einem Gassackpaket (1), das einen zum Schutz eines Fahrzeuginsassen aufblasbaren Gassack (3), ein Gehäuse (4), in dem das Gassackpaket (1) aufgenommen ist, sowie eine Hülle, in der der Gassack (3) vakuumverpackt ist, aufweist, wobei
- die Hülle ein erstes und ein zweites Hüllteil (11, 12) umfasst,
- das erste Hüllteil (11) und das zweite Hüllteil (12) jeweils mindestens einen Flanschabschnitt (111, 112) aufweisen, und
- die beiden Flanschabschnitte (111, 112) miteinander verbunden sind und zunächst von dem übrigen Gassackpaket abstehen, nachdem sie miteinander verbunden wurden, und
- die beiden Flanschabschnitte (111, 112) zumindest teilweise so umgefaltet sind, dass sie sich entlang einer Außenseite (113) des übrigen Gassackpaketes erstrecken,
**dadurch gekennzeichnet, dass**
die beiden Flanschabschnitte (111, 112) an der Außenseite (113) des übrigen Gassackpaketes festgelegt oder zwischen dem Gehäuse (4) und der Außenseite (113) des Gassackpaketes geklemmt sind.

2. Gassackanordnung nach Anspruch 1, **dadurch gekennzeichnet, dass** sich der umgefaltete Flanschabschnitt (111) des ersten Hüllteils (11) zwischen der Außenseite (113) des übrigen Gassackpaketes und dem umgefalteten Flanschabschnitt (112) des zweiten Hüllteils (12) erstreckt.

3. Gassackanordnung nach Anspruch 1 oder 2, **dadurch gekennzeichnet, dass** der umgefaltete Flanschabschnitt (111) des ersten Hüllteils (11) an der Außenseite (113) des übrigen Gassackpaketes anliegt.

4. Gassackanordnung nach einem der vorhergehenden Ansprüche, **dadurch gekennzeichnet, dass** die beiden Flanschabschnitte (111, 112) aneinanderliegen.

5. Gassackanordnung nach einem der vorhergehenden Ansprüche, **dadurch gekennzeichnet, dass** das erste Hüllteil (11) den Gassack (3) an einer Seite umgibt, die einem Gasgenerator zum Aufblasen des Gassacks (3) zugewandt ist.

6. Gassackanordnung nach einem der vorhergehenden Ansprüche, **dadurch gekennzeichnet, dass** das zweite Hüllteil (12) den Gassack (3) an einer Seite umgibt, die einem Gasgenerator zum Aufblasen des Gassacks abgewandt ist.

7. Gassackanordnung nach einem der vorhergehenden Ansprüche, **dadurch gekennzeichnet, dass** das Gassackpaket (1) eine Ausnehmung zum Aufnehmen eines Gasgenerators aufweist.

8. Gassackanordnung nach einem der vorhergehenden Ansprüche, **dadurch gekennzeichnet, dass** das übrige Gassackpaket näherungsweise quaderförmig ausgebildet ist.

9. Gassackanordnung nach Anspruch 8, **dadurch gekennzeichnet, dass** sich die Flanschabschnitte (111, 112) entlang einer Seitenfläche des Gassackpaketes erstrecken.

10. Gassackanordnung nach einem der vorhergehenden Ansprüche, **dadurch gekennzeichnet, dass** das erste Hüllteil (11) eine Aufnahme (114) für den Gassack (3) ausformt.

11. Gassackanordnung nach Anspruch 10, **dadurch gekennzeichnet, dass** das zweite Hüllteil (12) eine Öffnung (116) des ersten Hüllteils (12), durch die der Gassack in die Aufnahme (114) gebracht werden kann, überdeckt.

12. Gassackanordnung nach einem der vorhergehenden Ansprüche, **dadurch gekennzeichnet, dass** die beiden Flanschabschnitte (111, 112) über eine Kleb- oder Schweißverbindung miteinander verbunden sind.

13. Gassackanordnung nach einem der vorhergehenden Ansprüche, **dadurch gekennzeichnet, dass** das zumindest eines der beiden Hüllteile (11, 12) eine tiefgezogene Folie ist.

14. Lenkrad eines Kraftfahrzeuges mit einer Gassackanordnung gemäß einem der vorhergehenden Ansprüche.

15. Verfahren zum Herstellen einer Gassackanordnung für ein Fahrzeuginsassen-Rückhaltesystem, mit den Schritten:
- Anordnen eines Gassacks (3) in einem ersten Hüllteil (11);
- Verbinden eines Flanschabschnitts (111) des ersten Hüllteils (11) mit einem Flanschabschnitt (112) eines zweiten Hüllteils (12) zum Bilden einer Hülle, in der der Gassack (3) angeordnet ist;
- Evakuieren der Hülle, so dass Hülle und Gassack ein Gassackpaket (1) bilden;
- Umfalten jeweils zumindest eines Teiles der beiden Flanschabschnitte (111, 112) derart, dass sie sich näherungsweise entlang einer Außenseite (113) des übrigen Gassackpaketes erstrecken;
**gekennzeichnet durch**
- Festlegen der beiden Flanschabschnitte (111, 112) an der Außenseite (113) des übrigen Gassackpaketes oder Klemmen der beiden Flanschabschnitte (111, 112) zwischen einem Gehäuse (4) und der Außenseite (113) des Gassackpaketes.

## Claims

1. An airbag arrangement for a vehicle occupant restraint system, comprising
- an airbag package (1) which includes an airbag (3) which can be inflated to protect a vehicle occupant, a housing (4) in which the airbag package (1) is accommodated as well as a sleeve in which the airbag (3) is vacuum-packaged, wherein
- the sleeve comprises a first and a second sleeve part (11, 12),
- the first sleeve part (11) and the second sleeve part (12) each include at least one flange portion (111, 112), and
- the two flange portions (111, 112) are connected with each other and initially protrude from the remaining airbag package, after they have been connected with each other, and
- the two flange portions (111, 112) are at least partly folded such that they extend along an outer surface (113) of the remaining airbag package,
**characterized in that**
the two flange portions (111, 112) are fixed on the outer surface (113) of the remaining airbag package or are clamped between the housing (4) and the outer surface (113) of the airbag package.

2. The airbag arrangement according to claim 1, **characterized in that** the folded flange portion (111) of the first sleeve part (11) extends between the outer surface (113) of the remaining airbag package and the folded flange portion (112) of the second sleeve part (12).

3. The airbag arrangement according to claim 1 or 2, **characterized in that** the folded flange portion (111) of the first sleeve part (11) rests against the outer surface (113) of the remaining airbag package.

4. The airbag arrangement according to any of the preceding claims, **characterized in that** the two flange portions (111, 112) rest against each other.

5. The airbag arrangement according to any of the preceding claims, **characterized in that** the first sleeve part (11) surrounds the airbag (3) on a side which faces a gas generator for inflating the airbag (3).

6. The airbag arrangement according to any of the preceding claims, **characterized in that** the second sleeve part (12) surrounds the airbag (3) on a side which faces away from a gas generator for inflating the airbag.

7. The airbag arrangement according to any of the preceding claims, **characterized in that** the airbag package (1) includes a recess for accommodating a gas generator.

8. The airbag arrangement according to any of the preceding claims, **characterized in that** the remaining airbag package is formed approximately cuboid.

9. The airbag arrangement according to claim 8, **characterized in that** the flange portions (111, 112) extend along a side face of the airbag package.

10. The airbag arrangement according to any of the preceding claims, **characterized in that** the first sleeve part (11) forms a receptacle (114) for the airbag (3).

11. The airbag arrangement according to claim 10, **characterized in that** the second sleeve part (12) covers an opening (116) of the first sleeve part (12), through which the airbag can be brought into the receptacle (114).

12. The airbag arrangement according to any of the preceding claims, **characterized in that** the two flange portions (111, 112) are connected with each other via an adhesive or welded joint.

13. The airbag arrangement according to any of the preceding claims, **characterized in that** at least one of the two sleeve parts (11, 12) is a deep-drawn film.

14. A steering wheel of a motor vehicle with an airbag arrangement according to any of the preceding claims.

15. A method for producing an airbag arrangement for a vehicle occupant restraint system, with the following steps:
- arranging an airbag (3) in a first sleeve part (11);
- connecting a flange portion (111) of the first sleeve part (11) with a flange portion (112) of a second sleeve part (12) for forming a sleeve in which the airbag (3) is arranged;
- evacuating the sleeve, so that sleeve and airbag form an airbag package (1);
- folding at least a part of the two flange portions (111, 112) each such that they extend approximately along an outer surface (113) of the remaining airbag package;
**characterized by**
- fixing the two flange portions (111, 112) on the outer surface (113) of the remaining airbag package or are clamping the two flange portions (111, 112) between the housing (4) and the outer surface (113) of the airbag package.

## Revendications

1. Dispositif de coussin gonflable destiné à un système de retenue d'occupants d'un véhicule, comprenant
- un paquet de coussin gonflable (1), qui comporte un coussin gonflable (3) pouvant être gonflé pour protéger un occupant du véhicule, un boîtier (4) dans lequel le paquet de coussin gonflable (1) est logé, ainsi qu'une enveloppe dans laquelle le coussin gonflable (3) est ensaché sous vide, dans lequel
- l'enveloppe présente des première et seconde parties d'enveloppement (11, 12),
- la première partie d'enveloppement (11) et la seconde partie d'enveloppement (12) comportent respectivement au moins une section de bride (111, 112), et
- les deux sections de bride (111, 112) sont reliées l'une à l'autre, et font tout d'abord saillie au-delà du reste du paquet de coussin gonflable après qu'elles ont été fixées l'une à l'autre, et
- les deux sections de bride (111, 112) sont repliées au moins partiellement, de façon telle qu'elles s'étendent le long d'une face extérieure (113) du reste du paquet de coussin gonflable,
**caractérisé en ce que**
les deux sections de bride (111, 112) sont bloquées à demeure sur la face extérieure (113) du reste du paquet de coussin gonflable, ou sont coincées entre le boîtier (4) et ladite face extérieure (113) du paquet de coussin gonflable.

2. Dispositif de coussin gonflable selon la revendication 1, **caractérisé en ce que** la section de bride repliée (111) de la première partie d'enveloppement (11) s'étend entre la face extérieure (113) du reste du paquet de coussin gonflable, et la section de bride repliée (112) de la seconde partie d'enveloppement (12).

3. Dispositif de coussin gonflable selon la revendication 1 ou 2, **caractérisé en ce que** la section de bride repliée (111) de la première partie d'enveloppement (11) est en applique contre la face extérieure (113) du reste du paquet de coussin gonflable.

4. Dispositif de coussin gonflable selon l'une des revendications précédentes, **caractérisé en ce que** les deux parties de bride (111, 112) sont en applique l'une contre l'autre.

5. Dispositif de coussin gonflable selon l'une des revendications précédentes, **caractérisé en ce que** la première partie d'enveloppement (11) entoure le coussin gonflable (3) sur un côté tourné vers un générateur de gaz assigné au gonflage dudit coussin gonflable (3).

6. Dispositif de coussin gonflable selon l'une des revendications précédentes, **caractérisé en ce que** la seconde partie d'enveloppement (12) entoure le coussin gonflable (3) sur un côté tourné à l'opposé d'un générateur de gaz assigné au gonflage dudit coussin gonflable.

7. Dispositif de coussin gonflable selon l'une des revendications précédentes, **caractérisé en ce que** le paquet de coussin gonflable (1) comporte un évidement, en vue de recevoir un générateur de gaz.

8. Dispositif de coussin gonflable selon l'une des revendications précédentes, **caractérisé en ce que** le reste du paquet de coussin gonflable est de réalisation approximativement parallélépipédique.

9. Dispositif de coussin gonflable selon la revendication 8, **caractérisé en ce que** les parties de bride (111, 112) s'étendent le long d'une surface latérale du paquet de coussin gonflable.

10. Dispositif de coussin gonflable selon l'une des revendications précédentes, **caractérisé en ce que** la première partie d'enveloppement (11) donne naissance à un logement (114) dévolu au coussin gonflable (3).

11. Dispositif de coussin gonflable selon la revendication 10, **caractérisé en ce que** la seconde partie d'enveloppement (12) recouvre un orifice (116) de la première partie d'enveloppement (12) à travers lequel le coussin gonflable peut être inséré dans le logement (114).

12. Dispositif de coussin gonflable selon l'une des revendications précédentes, **caractérisé en ce que** les deux parties de bride (111, 112) sont reliées l'une à l'autre par une liaison collée ou soudée.

13. Dispositif de coussin gonflable selon l'une des revendications précédentes, **caractérisé en ce qu'**au moins l'une des deux parties d'enveloppement (11, 12) est un film matricé en profondeur.

14. Volant de direction d'un véhicule automobile, équipé d'un dispositif de coussin gonflable conforme à l'une des revendications précédentes.

15. Procédé de fabrication d'un dispositif de coussin gonflable destiné à un système de retenue d'occupants d'un véhicule, comprenant les étapes suivantes :
- mise en place d'un coussin gonflable (3) dans une première partie d'enveloppement (11) ;
- liaison d'une partie de bride (111) de la première partie d'enveloppement (11) avec une partie de bride (112) d'un seconde partie d'enveloppement (12), afin de former une enveloppe dans laquelle le coussin gonflable (3) est disposé ;
- création d'un vide dans l'enveloppe, de telle sorte que ladite enveloppe et le coussin gonflable forment un paquet de coussin gonflable (1) ;
- rabat d'au moins une partie respective des deux parties de bride (111, 112), de manière qu'elles s'étendent approximativement le long d'une face extérieure (113) du reste du paquet de coussin gonflable ;
**caractérisé par**
- un blocage à demeure des deux parties de bride (111, 112) sur la face extérieure (113) du reste du paquet de coussin gonflable, ou un coincement des deux
parties de bride (111, 112) entre un boîtier (4) et ladite face extérieure (113) du paquet de coussin gonflable.
